(19) Europäisches Patentamt

European Patent Office

Office européen des brevets

(11) **EP 1 316 077 B1**

(12) **FASCICULE DE BREVET EUROPEEN**

(45) Date de publication et mention
de la délivrance du brevet:
**15.09.2004 Bulletin 2004/38**

(21) Numéro de dépôt: **01947561.5**

(22) Date de dépôt: **21.06.2001**

(51) Int Cl.$^7$: **G07F 7/10**

(86) Numéro de dépôt international:
**PCT/FR2001/001947**

(87) Numéro de publication internationale:
**WO 2002/019283 (07.03.2002 Gazette 2002/10)**

(54) **SECURITE D'ACCES PAR CODE SECRET A UN MOYEN DE TRAITEMENT DE DONNEES**

ZUGRIFFSSICHERUNG MIT EINEM GEHEIMKODE ZU EINEM DATENVERARBEITUNGSMITTEL

SECRET CODE SECURITY ACCESS TO DATA PROCESSING MEANS

(84) Etats contractants désignés:
**DE ES FR GB IT**

(30) Priorité: **29.08.2000 FR 0011054**

(43) Date de publication de la demande:
**04.06.2003 Bulletin 2003/23**

(73) Titulaire: **GEMPLUS**
**13420 Gémenos (FR)**

(72) Inventeurs:
• **MOITREL, Pascal**
**F-13400 AUBAGNE (FR)**

• **PASCAL, Johan**
**F-30430 St. Jean de Maruejols (FR)**

(74) Mandataire: **Aivazian, Denis et al**
**Gemplus,**
**La Vigie,**
**BP 90**
**13705 La Ciotat (FR)**

(56) Documents cités:
EP-A- 1 004 980    DE-A- 3 904 215
FR-A- 2 496 294    US-A- 4 786 790
US-A- 4 907 272    US-A- 6 021 201

## Description

La présente invention concerne de manière générale tout moyen électronique de traitement de données dont les fonctionnalités, ou des services qui y sont liés, sont accessibles par un code secret, dit également mot de passe ou code confidentiel, qui est le plus souvent reçu par le moyen de traitement à la suite d'une composition sur le clavier d'un moyen d'accueil du moyen de traitement (see US-A-4907272).

Par exemple, le moyen de traitement de données est une carte à microcontrôleur, dite également carte à circuit intégré ou carte à puce (Smart Card), telle qu'une carte de crédit pour terminal bancaire ou une carte de porte-monnaie électronique pour terminal de point de vente, ou pour tout autre terminal tel qu'un terminal radiotéléphonique mobile doté d'un lecteur de carte additionnelle, ou bien telle qu'une carte d'identité SIM (Subscriber Identity Module) dans un terminal radiotéléphonique mobile.

Plus particulièrement l'invention a trait à la sécurité du contrôle d'accès aux fonctionnalités de la carte à puce par un code présenté à celle-ci qui est comparé à un code secret associé à la carte à puce et pré-mémorisé dans celle-ci.

Un attaquant, une personne malintentionnée, souhaitant connaître le code secret d'une carte à puce peut procéder à une analyse de consommation électrique (en anglais, Single Power Analysis SPA) en connectant un appareil de mesure de tension à l'interface électrique entre la carte à puce et son terminal d'accueil.

Dans une carte à puce selon la technique antérieure, le code secret pré-mémorisé dans une mémoire non volatile de la carte à puce et le code présenté écrit temporairement en mémoire RAM de la carte à puce sont divisés en blocs et comparés bloc par bloc. Si après l'une des comparaisons de blocs, les blocs respectifs ne sont pas identiques, les comparaisons des blocs suivants ne sont pas exécutées et le code présenté est refusé pour l'accès aux fonctionnalités. La durée de la vérification du code présenté dépend ainsi du nombre de premiers blocs corrects dans le code présenté. Par conséquent, la durée de la manipulation du code secret pour la vérification de tout code présenté en vue d'authentifier le véritable possesseur de la carte à puce est variable ce qui donne implicitement des informations sur le code secret grâce à des enregistrements de caractéristiques de consommation énergétique de la carte à puceet à des mesures des durées des comparaisons pour différents codes présentés.

La présente invention vise à remédier à ces fuites d'informations sur le code secret d'accès à un moyen de traitement de données, tel que carte à puce, et ainsi à faire disparaître des différences de consommation électrique et de durée de comparaison; quel que soit le code présenté erroné.

Ce problème est résolu par le procédé pour accéder à un moyen de traitement de données associé à un code confidentiel secret et accessible en lui appliquant un code confidentiel présenté par un moyen d'accueil tel que défini par la revendication 1.

Les comparaisons relatives à une partie du code présenté et à une partie du nombre déterminé qui ne contient pas de données liées au code secret et qui joue le rôle d'un code secret factice, simulent les premières comparaisons, c'est-à-dire réalisent une manipulation factice du code secret, vis-à-vis de l'extérieur, dès que le code présenté est détecté erroné.

Le nombre de comparaisons bloc par bloc étant toujours constant indépendamment du code présenté correct, partiellement ou totalement erroné, et plus généralement la suite des opérations exécutées étant constante pour tous les codes présentés, aucune signature notable en matière de mesure de consommation de courant n'est détectable d'un code présenté au suivant.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme schématique montrant un système de mise en oeuvre du procédé de contrôle d'accès selon l'invention dans le contexte d'une carte à puce ;
- la figure 2 est un algorithme des étapes principales du procédé de contrôle d'accès selon une réalisation préférée de l'invention ; et
- la figure 3 montre des variantes de l'algorithme de procédé de la figure 2.

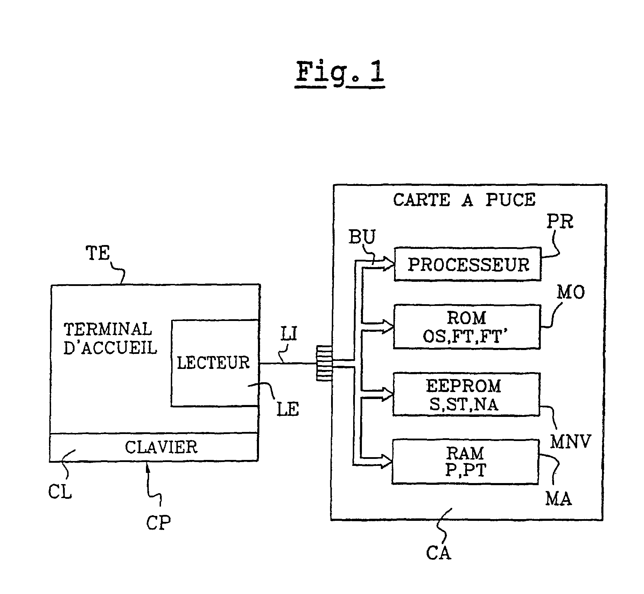

Selon la réalisation schématique illustrée à la figure 1, un moyen de traitement de données électronique est constitué par une carte à puce CA dont la "puce" est composée d'un microcontrôleur. Schématiquement, le microcontrôleur comporte une unité de traitement centrale CPU formée par un microprocesseur PR, une mémoire MO de type ROM incluant un système d'exploitation OS de la carte et notamment des algorithmes d'application de communication et d'authentification spécifiques, une mémoire non volatile MNV de type programmable et effaçable, comme une mémoire EEPROM, qui contient des données notamment liées au possesseur de la carte et au fournisseur de la carte, et une mémoire MA de type RAM destinée à recevoir notamment des données d'un terminal d'accueil TE de la carte. Tous les composants PR, MO, MNV et MA sont reliés entre eux par un bus interne BU.

Le terminal d'accueil TE, tel qu'un terminal bancaire ou un terminal téléphonique, est équipé d'un clavier CL pour notamment composer un code confidentiel P, dit code présenté, à présenter à la carte. Dans un lecteur LE du terminal TE est introduite une partie de la carte CA contenant le microcontrôleur et supportant typiquement six à huit contacts électriques d'une liaison électrique LI entre le lecteur LE et le bus BU interne à la carte CA lorsque la carte est du type à contact.

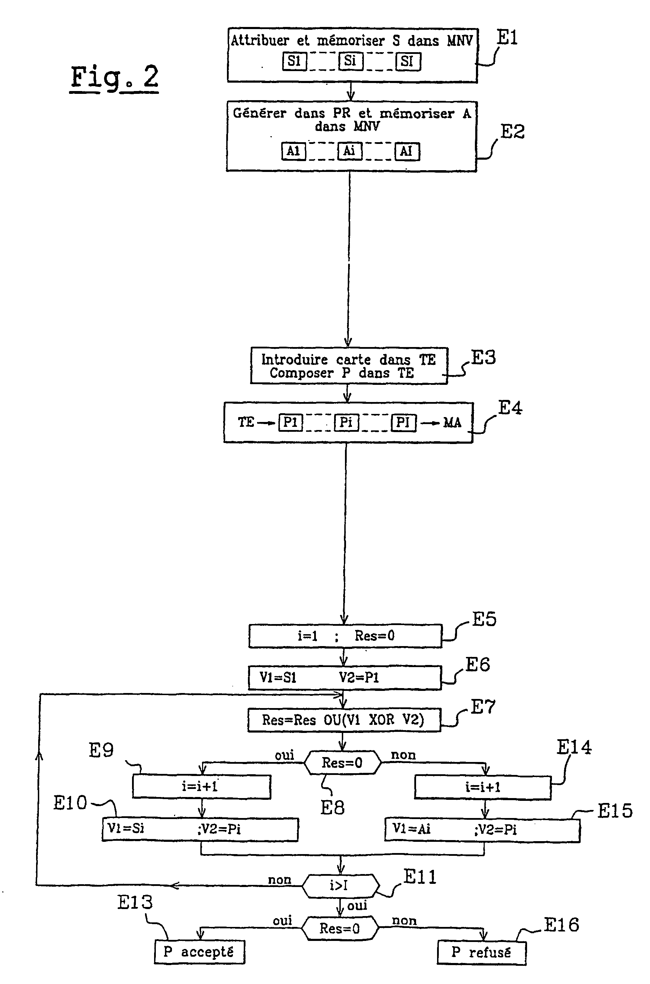

En référence maintenant à la figure 2, le procédé de contrôle d'accès selon une réalisation préférée de l'invention pour la carte à puce CA montrée à la figure 1 comprend essentiellement des étapes E1 à E16.

La première étape E1 est préalablement réalisée, chez le fournisseur de carte, lors de la fabrication de la carte puis lors de l'acquisition de la carte CA, par exemple lors de l'abonnement à un service accessible par les fonctionnalités de la carte.

En fonction de données du fabricant de carte notamment, le fournisseur de carte attribue un code secret S de plusieurs chiffres à la carte CA, qui est écrit à un emplacement prédéterminé dans la mémoire non volatile MNV de la carte CA. Le code secret S est divisé en I blocs de bits S1 à SI, chaque bloc comprenant par exemple un nombre prédéterminé d'octets variant typiquement entre un octet et quelques octets.

A l'étape préalable E2, un nombre déterminé A est généré généralement aléatoirement par le processeur PR de la carte CA. Le nombre A a la même taille que le code S et est divisé en I blocs de bits A1 à AI. De préférence, le code secret S et le nombre déterminé A sont écrits dans des cases de la mémoire non volatile MNV de la carte CA qui correspondent à des adresses ayant des nombres de bits NB0 et NB1 respectivement aux états logiques "0" et "1", sensiblement identiques ; par exemple, pour des adresses à 8 bits, les adresses "11011011" et "11101110" avec NB0 = 2 et NB1 = 6, ou bien les adresses de cases voisines "00011111" et "00011110" avec NB0 = 3 et 4 et NB1 = 5 et 4 sont satisfaisantes, afin que la lecture d'un bloc Si du code secret soit similaire à la lecture d'un bloc Ai du nombre aléatoire, et ainsi ces deux lectures soient quasiment identiques vis-à-vis d'une mesure de consommation électrique. Ceci contribue à éviter l'apparition de signatures de consommation de courant différentes entre des comparaisons relatives à des présentations de codes présentés différents.

Les étapes E3 à E16 sont effectuées après l'introduction de la carte CA dans le lecteur LE du terminal d'accueil TE qui est ainsi relié par la liaison électrique LI et le bus interne BU au microcontrôleur de la carte CA.

Lors de chaque utilisation de la carte, un code présenté P qui doit être normalement identique au code secret, est composé sur le clavier CL du terminal TE à l'étape E3 afin de vérifier le code présenté dans la carte CA. Soit au fur et à mesure de la composition des chiffres du code présenté, par exemple au nombre de quatre, soit de manière continue, le terminal TE transmet le code présenté P à la carte CA à travers la liaison LI et le bus BU afin qu'il soit écrit dans la mémoire RAM MA, à l'étape E4.

Aux étapes suivantes E5 et E6, le processeur met à zéro des registres internes pour un indice i et une variable logique de résultat de comparaison Res, et met deux registres internes pour variables de bloc V1 et V2 aux valeurs des premiers blocs S1 et P1 lues respectivement dans les mémoires MNV et MA.

Puis à une première étape E7 d'une boucle E7-E11, le processeur PR compare les variables V1 et V2, c'est-à-dire le premier bloc S1 du code secret dans la mémoire MNV et le premier bloc P1 du code présenté dans la mémoire MA, en additionnant le résultat de comparaison de boucle précédente Res selon la relation logique suivante :

$$Res = Res \ OU(V1 \ XOR \ V2),$$

soit

$$Res = Res \ OU(S1 \ XOR \ P1).$$

Si le résultat Res est encore égal à zéro à l'étape suivante E8, c'est-à-dire si les variables comparées V1 = S1 et V2 = P1 sont identiques, l'indice i est incrémenté à l'étape E9, et les variables V1 et V2 sont mises aux valeurs des blocs suivants S2 et P2 à l'étape E10. Si l'indice i n'est pas supérieur à I à l'étape E11, une autre boucle E7 à E11 est exécutée pour comparer les deuxièmes blocs P2 et S2 et incrémenter l'indice i, et ainsi de suite tant que les blocs comparés Pi et Si sont identiques et jusqu'à ce que l'indice i atteigne l'indice I. Dans ce cas, la variable de résultat Res demeure égale à zéro jusqu'à l'étape E12 succédant à l'étape E11, et les blocs Pi du code présenté sont respectivement identiques aux blocs Si du code secret. L'étape finale E13 accepte le code présenté P pour donner accès à des fonctionnalités de la carte CA, par exemple une application de service paiement ou de service téléphonique.

En revenant à l'étape E8, si la variable de résultat Res est égale à 1, c'est-à-dire si l'un Pi des blocs du code présenté P est différent du bloc respectif Si du code secret S, le code P n'est pas immédiatement refusé, mais selon l'invention, continue à être traité par le processeur PR comme si, vis-à-vis de l'extérieur de la carte, le code présenté P n'était par erroné afin toujours d'exécuter au total I boucles d'étapes E7-E11, c'est-à-dire I comparaison de blocs, soit i comparaisons de blocs P1 à Pi et S1 à Si et I-i comparaisons de blocs P(i+1) à PI et A(i+1) à AI, le code présenté P contenant au moins un bloc erroné Pi.

Ainsi, dès que Pi ≠ Si à l'étape E8, l'indice i est incrémenté d'une unité à l'étape E14, et le processeur PR met les valeurs des variables V1 et V2 à celle du bloc A(i+1) du nombre aléatoire lue dans la mémoire MNV et à celle du bloc P(i+1) du code présenté lue dans la mémoire MA à l'étape E15 pour les comparer au cours de l'étape E7 de la boucle suivante tant que i n'est pas supérieur à I à l'étape E11. Toutefois, le résultat de comparaison Res à l'étape E7 est toujours égal à "1" quelles que soient les différences entre les blocs P(i+1) à PI et A(i+1) à AI au cours des boucles suivantes, le processeur PR continuant l'exécution de la boucle d'étapes E7, E8, E14, E15 et E11 jusqu'à la comparaison des blocs PI et AI.

Après la dernière comparaison relative aux blocs PI et AI, le résultat Res étant à "1" à l'étape E12, le processeur PR refuse le code présenté P à l'étape E16, par exemple en commandant l'affichage d'un message adéquat sur l'écran du terminal d'accueil TE. D'autres tentatives de composition de code présenté en nombre limité peuvent être éventuellement autorisées.

En variante, les opérations i = i+1 et V2 = Pi aux étapes E9 et E10 et aux étapes E14 et E15 sont exécutées entre les étapes E7 et E8.

Il apparaît que le nombre d'étapes entre les deux possibilités offertes à l'étape conditionnelle E8 "Res = 0 ?" est constant et les opérations exécutées sont identiques depuis la composition du code présenté P à l'étape E3, quel que soit le contenu du code présenté P. Par conséquent, le procédé comporte toujours un nombre constant d'étapes ou d'opérations exécutées, et donc de lignes de code, que le code présenté P soit correct, ou partiellement ou totalement erroné. La durée du procédé est donc constante, et la variation de la consommation électrique de la carte pendant ce procédé est quasiment la même indépendamment du code présenté.

Ainsi pour I blocs, le processeur exécute k boucles E7, E8, E9, E10, E11 relatives à des comparaisons avec les blocs S1 à Sk du code secret, et I-k boucles E7, E8, E14, E15, E11 en nombre complémentaire de k par rapport à I, relatives à des comparaisons avec les blocs A (k+1) à AI du nombre A, avec $1 \leq k \leq I$.

De préférence, deux cartes à puce associées à des codes secrets identiques sont associés à des nombres déterminés A . différents. Les nombres déterminés étant a priori aléatoires et donc différents pour les deux cartes, les effets de la manipulation de ces nombres aléatoires ne peuvent servir à la caractérisation des cartes.

A chaque code secret S correspond de préférence un nombre déterminé respectif A. Ainsi avantageusement, lorsque le code secret associé à une carte est modifié, le nombre déterminé A est également modifié. Par exemple si deux chiffres d'un code secret sont inversés, les deux nombres déterminés correspondant à ces deux versions de code secret sont différents. Cette variante évite de reconnaître un nombre déterminé dans une première carte grâce à la manipulation du nombre déterminé dans une autre carte associée à un code commun avec la première carte.

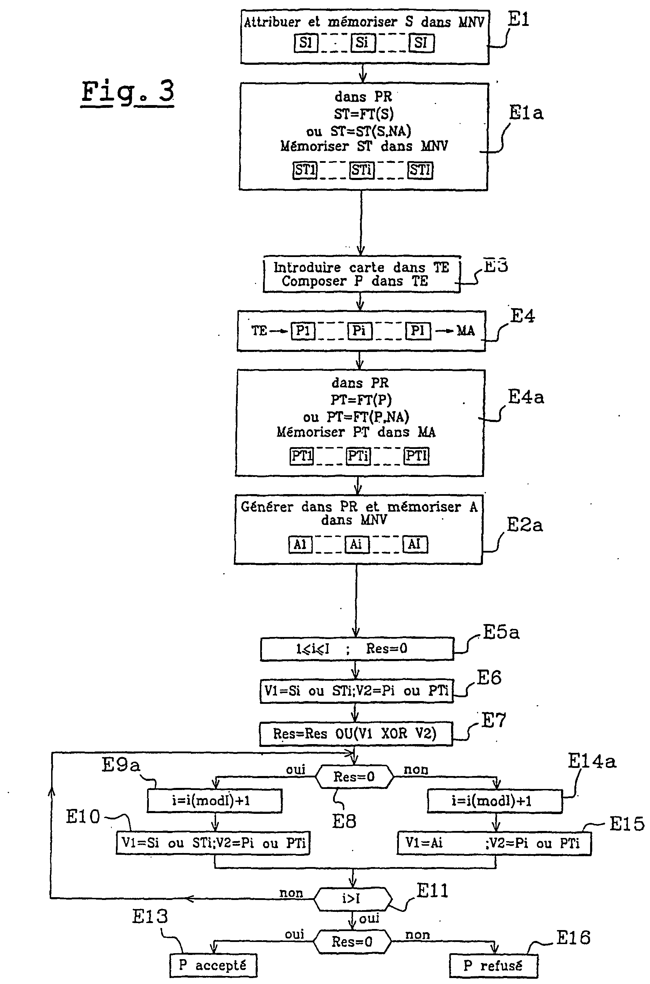

Dans la figure 3, on retrouve l'essentiel de l'algorithme de procédé d'accès selon la figure 2, avec des étapes modifiées et/ou ajoutées selon des variantes d'étape indiquées par la lettre a qui améliore encore la sécurité du contrôle d'accès aux fonctionnalités de la carte.

Selon une première variante, au lieu de ne générer le nombre déterminé quasiment à la mise en service de la carte, le processeur PR génère aléatoirement et donc modifie le nombre A chaque fois qu'un code présenté P est appliqué à la carte CA pour y être vérifié, à une étape E2a remplaçant l'étape E2. L'étape E2a succède à l'étape E4 pour l'écriture du code présenté P et précède la double boucle E7 à E11 et donc les comparaisons E7.

La génération d'un nombre A à chaque présentation de code erroné P garantit que les I comparaisons des blocs du code P et des blocs du nombre A ne s'exécutent jamais de la même manière, au détriment d'une consommation électrique qui peut varier sensiblement pour des présentations d'un même code erroné P.

Selon une deuxième variante, l'indice i est choisi aléatoirement entre 1 et I par le processeur PR à une étape E5a à la place de l'étape E5. Pour cette deuxième variante, les étapes E9 et E14 devenues E9a et E14a comprennent l'incrémentation i(mod I)+1 de l'indice i. Ceci revient à choisir aléatoirement un nombre A parmi I nombres si le nombre A est déterminé initialement à l'étape E2.

Selon une troisième variante, le procédé d'accès comprend en outre une transformation préalable E1a du code secret S en un code secret transformé ST selon une fonction de transformation FT implémentée dans la mémoire MO de la carte CA en tant que moyen de traitement de données, la transformation E1a étant comprise entre les étapes E1 et E3 ; puis à chaque utilisation de la carte en tant que moyen de traitement de données, une transformation E4a du code présenté P en un code présenté transformé PT selon la fonction de transformation, avant l'application des étapes E5 à E16 et particulièrement des comparaisons bloc par bloc E7 mais relativement aux blocs STi et PTi du code présenté transformé et du code secret transformé ainsi qu'au nombre déterminé A, la transformation E4a succédant à l'étape E4.

Au cours de l'utilisation du moyen de traitement constitué par la carte à puce selon cette troisième variante, le code secret S remplacé par le code transformé ST n'y est pas mémorisé et n'est donc pas manipulé dans la carte lors de toute présentation du code confidentiel présenté.

Comme cela est décrit dans la demande de brevet français non publiée N° 0007886 déposée par le demandeur le 20 juin 2000 (FR-A-2810481) , la fonction de transformation peut être irréversible, un hachage, liée à un nombre aléatoire NA fixé lors de la création de la carte ou bien dépendante d'un deuxième nombre aléatoire variable à chaque présentation du code présenté, appliquée itérativement en fonction du nombre de présentations précédentes du code présenté, une permutation prédéterminée de parties de code, ou une fonction homomorphique. Certaines de ces caractéristiques de fonction de transformation peuvent être combinées entre elles.

Les étapes suivantes E6 à E11 sont appliquées aux blocs ST1 à STI et PT1 à PTI des codes transformés ST et PT écrits en mémoires MNV et MA au lieu des blocs S1 à SI et P1 à PI des codes S et P respectivement.

Dans la description ci-dessus, il sera compris que la carte à puce recouvre tous les types connus de carte à puce, dites également cartes à microcontrôleur, comme les cartes à contact ou sans contact énoncées ci-après à titre d'exemple non limitatif : cartes de crédit (Cartes Bleues), cartes de paiement, cartes prépayées, cartes téléphoniques, cartes SIM, cartes "additionnelles", cartes de centrale d'achat, cartes de jeu, etc. Plus généralement, l'invention concerne non seulement des cartes à puce mais également d'autres objets électroniques portables désignés indifféremment par moyens de traitement de données électroniques, tels que assistants ou organiseurs électroniques, porte-monnaie électroniques, jetons, calculettes, etc.

Le terminal d'accueil du moyen de traitement de données électronique peut être par exemple du type terminal informatique, ordinateur personnel notamment portable, terminal bancaire, terminal de point de vente, terminal radiotéléphonique, dispositif de contrôle d'accès à un local ou à une armoire forte, etc. Le moyen d'accueil peut être éloigné du moyen de traitement de données, ceux-ci étant reliés par tout moyen de transmission de données.

Le code secret au sens de l'invention est également désigné dans certains contextes comme mot de passe (password), ou code confidentiel, ou bien numéro d'identité personnel PIN (Personal Identification Number) ou CHV (Card Holder Verification) ou identificateur PTI (Personal Telecommunication Identifier) notamment pour des cartes SIM de terminal radiotéléphonique.

Le code secret est en général un code alphanumérique. Il peut être appliqué au moyen de traitement de données, carte à puce ou objet électronique portable, par tout moyen de saisie de code connu, autre qu'un clavier à touches, par exemple par la voix et reconnaissance vocale, ou bien par reconnaissance d'une signature biométrique, par exemple au moins une empreinte digitale.

## Revendications

**1.** Procédé pour accéder à un moyen de traitement de données (CA) associé à un code secret (S) et accessible en lui appliquant un code présenté (P) par un moyen d'accueil (TE), **caractérisé en ce qu'**il comprend à chaque utilisation du moyen de traitement (CA), un nombre constant d'opérations prédéterminées (E5-E16) comportant des comparaisons (E7-F10) bloc par bloc (Pi, Si) du code présenté (P) et du code secret (S) tant que les blocs comparés sont identiques (Res = 0), et des comparaisons (E7-E15) bloc par bloc (Pi, Ai) d'une partie du code présenté et d'une partie d'un nombre déterminé (A) dès que les blocs comparés du code présenté et du code secret sont différents (Res = 1) jusqu'à ce que tous les blocs (P1-PI) du code présenté aient subi une comparaison, de manière à obtenir une suite d'opérations exécutées constante, que le code présenté (P) soit correct, ou partiellement ou totalement erroné.

**2.** Procédé conforme à la revendication 1 **caractérisé en ce que** le code secret (S) et le nombre déterminé (A) sont écrits dans des cases de la mémoire non volatile (MNV) du moyen de traitement (CA) qui correspondent à des adresses ayant des nombres de bits respectivement aux états logiques « 0 » et « 1 » sensiblement identiques, afin que la lecture d'un bloc code secret (Si) soit similaire à la lecture d'un bloc du nombre déterminé (Ai) vis-à-vis d'une mesure de consommation électrique.

**3.** Procédé conforme à la revendication 1 **caractérisé en ce que** le code secret (S) et le nombre déterminé (A) sont écrits dans des cases voisines de la mémoire non volatile (MNV) du moyen de traitement (CA), afin que la lecture d'un bloc code secret (Si) soit similaire à la lecture d'un bloc du nombre déterminé (Ai) vis-à-vis d'une mesure de consommation électrique.

**4.** Procédé conforme à l'une des revendications 1 à 3 **caractérisé en ce qu'**il comprend une modification (E2a) du nombre déterminé (A) chaque fois qu'un code présenté (P) est appliqué au moyen de traitement (CA), préalablement à l'application des opérations prédéterminées (E5-E16).

**5.** Procédé conforme à l'une des revendications 1 à 4 **caractérisé en ce que** deux moyens de traitement de données (CA) associés à des codes secrets (S) identiques sont associés à des nombres déterminés différents (A).

**6.** Procédé conforme à l'une des revendications 1 à 5 **caractérisé en ce que** le nombre déterminé (A) est modifié lorsque le code secret (S) associé au moyen de traitement (CA) est modifié.

**7.** Procédé conforme à l'une des revendications 1 à 6 **caractérisé en ce qu'**il comprend les étapes suivantes :

- transformation préalable (E1a) du code secret (S) en un code secret transformé (ST) selon une fonction de transformation (FT) implémentée dans le moyen de traitement ;
- transformation (E4a) du code présenté (P) en un code présenté transformé (PT) selon là fonction de transformation (FT) ;
- comparaisons bloc par bloc (PTi, STi) du code présenté transformé (PT) et du code secret transformé (ST).

## Patentansprüche

1. Verfahren zum Zugriff auf ein mit einem Geheimcode (S) zusammenwirkenden Datenverarbeitungsmittel (CA), zugänglich durch seine Beaufschlagung mit einem von einem Empfangsmittel (TE) präsentierten Code (P), **dadurch gekennzeichnet, dass** es bei jeder Benutzung des Verarbeitungsmittels (CA) eine konstante Anzahl von vorgegebenen Operationen (E5-E16) umfasst, mit blockweisen (Pi, Si) Vergleichen (E7-E10) des präsentierten Codes (P) und des Geheimcodes (S), solange die verglichenen Blöcke identisch sind (Res = 0), und mit blockweisen (Pi, Ai) Vergleichen (E7-E15) eines Teils des präsentierten Codes und eines Teils einer bestimmten Zahl (A), sobald die verglichenen Blöcke des präsentierten Codes und des Geheimcodes unterschiedlich sind (Res = 1), bis dass alle Blöcke (P1-PI) des präsentierten Codes einem Vergleich unterzogen worden sind, um eine konstante Reihe von ausgeführten Operationen zu erhalten, ob der präsentierte Code (P) richtig oder teilweise oder gänzlich falsch ist.

2. Verfahren nach Anspruch 1, **dadurch gekennzeichnet, dass** der Geheimcode (S) und die bestimmte Zahl (A) in Felder des nicht flüchtigen Speichers (MNV) des Verarbeitungsmittels (CA) eingetragen werden, die Adressen mit jeweils in den logischen Zuständen "0" und "1" etwa identischer Bitzahlen entsprechen, damit das Lesen eines Geheimcodeblocks (Si) ähnlich dem Lesen eines Block der bestimmten Zahl (Ai) gegenüber einer Stromverbrauchsmessung ist.

3. Verfahren nach Anspruch 1, **dadurch gekennzeichnet, dass** der Geheimcode (S) und die bestimmte Zahl (A) in benachbarte Felder des nicht flüchtigen Speichers (MNV) des Verarbeitungsmittels (CA) eingetragen werden, damit das Lesen eines Geheimcodeblocks (Si) ähnlich dem Lesen eines Blocks der bestimmten Zahl (Ai) gegenüber einer Stromverbrauchsmessung ist.

4. Verfahren nach einem der Ansprüche 1 bis 3, **dadurch gekennzeichnet, dass** es eine Änderung (E2a) der bestimmten Zahl (A) umfasst, jedes Mal, wenn dem Verarbeitungsmittel (CA) ein präsentierter Code (P) vor der Anwendung der vorgegebenen Operationen (E5-E16) zugeführt wird.

5. Verfahren nach einem der Ansprüche 1 bis 4, **dadurch gekennzeichnet, dass** zwei identische mit Geheimcodes (S) zusammenwirkende Datenverarbeitungsmittel (CA) unterschiedlichen bestimmten Zahlen (A) zugeordnet sind.

6. Verfahren nach einem der Ansprüche 1 bis 5, **dadurch gekennzeichnet, dass** die bestimmte Anzahl (A) geändert wird, wenn der dem Verarbeitungsmittel (CA) zugeordnete Geheimcode (S) geändert wird.

7. Verfahren nach einem der Ansprüche 1 bis 6, **dadurch gekennzeichnet, dass** es die folgenden Schritte umfasst:

    - vorherige Umwandlung (E1a) des Geheimcodes (S) in einen umgewandelten Geheimcode (ST), gemäß einer in das Verarbeitungsmittel implementierten Umwandlungsfunktion (FT);
    - Umwandlung (E4a) des präsentierten Codes (P) in einen umgewandelten Code (PT), gemäß der Umwandlungsfunktion (FT);
    - blockweise (PTi, STi) Vergleiche des umgewandelten präsentierten Codes (PT) und des umgewandelten Geheimcodes (ST).

## Claims

1. A method for accessing a data processing means (CA) associated with a secret code (S) and accessible by applying to it a code (P) presented by an accepting means (TE), **characterised in that** it comprises at each use of the processing means (CA) a constant number of predetermined operations (E5-E16) comprising block by block (Pi, Si) comparisons (E7-E10) of the presented code (P) and of the secret code (S) as long as the compared blocks are identical (Res = 0), and block by block (Pi, Ai) comparisons (E7-E15) of part of the presented code and part of a given number (A) as soon as the compared blocks of the presented code and of the secret code are different (Res = 1) until all the blocks (P1-PI) of the presented code have undergone a comparison, so as to obtain a constant series of executed operations, whether the presented code (P) be correct or partially or totally erroneous.

2. A method according to Claim 1, **characterised in that** the secret code (S) and the given number (A) are written in boxes in the non-volatile memory (MNV) of the processing means (CA) which correspond to addresses having numbers of bits respectively at the logic states "0" and "1" which are substantially identical, so that the reading of a secret code block (Si) is similar to the reading of a block of the given number (Ai) vis-à-vis a measurement of electrical consumption.

3. A method according to Claim 1, **characterised in**

**that** the secret code (S) and the given number (A) are written in adjacent boxes in the non-volatile memory (MNV) of the processing means (CA), so that the reading of a secret code block (Si) is similar to the reading of a block of a given number (Ai) vis-à-vis a measurement of electrical consumption.

4. A method according to one of Claims 1 to 3, **characterised in that** it comprises a modification (E2a) to the given number (A) each time a presented code (P) is applied to the processing means (CA), prior to the application of the predetermined operations (E5-E16).

5. A method according to one of Claims 1 to 4, **characterised in that** two data processing means (CA) associated with identical secret codes (S) are associated with different given numbers (A).

6. A method according to one of Claims 1 to 5, **characterised in that** the given number (A) is modified when the secret code (S) associated with the processing means (CA) is modified.

7. A method according to one of Claims 1 to 6, **characterised in that** it comprises the following steps:

   - prior transformation (E1a) of the secret code (S) into a transformed secret code (ST) according to a transformation function (FT) implemented in the processing means;

   - transformation (E4a) of the presented code (P) into a transformed presented code (PT) according to the transformation function (FT);

   - block by block comparisons (PTi, STi) of the transformed presented code (PT) and of the transformed secret code (ST).

# Fig. 1

## Fig. 2

```
┌─────────────────────────────────────┐
│ Attribuer et mémoriser S dans MNV    │  E1
│      [S1] ─ ─ [Si] ─ ─ [SI]          │
└─────────────────────────────────────┘
                  │
                  ▼
┌─────────────────────────────────────┐
│ Générer dans PR et mémoriser A       │  E2
│           dans MNV                   │
│      [A1] ─ ─ [Ai] ─ ─ [AI]          │
└─────────────────────────────────────┘
                  │
                  ▼
┌─────────────────────────────────────┐
│   Introduire carte dans TE           │  E3
│   Composer P dans TE                 │
└─────────────────────────────────────┘
                  │
                  ▼
┌─────────────────────────────────────┐
│ TE ─ [P1] ─ ─ [Pi] ─ ─ [PI] ─ MA     │  E4
└─────────────────────────────────────┘
                  │
                  ▼
┌─────────────────────────────────────┐
│       i=1   :   Res=0                │  E5
└─────────────────────────────────────┘
                  │
                  ▼
┌─────────────────────────────────────┐
│     V1=S1       V2=P1                │  E6
└─────────────────────────────────────┘
                  │
                  ▼
┌─────────────────────────────────────┐
│   Res=Res OU(V1 XOR V2)              │  E7
└─────────────────────────────────────┘
```

E9

oui ← Res=0 → non    E14

E8

i=i+1          i=i+1

E10    V1=Si  ;V2=Pi        V1=Ai  ;V2=Pi    E15

non ← i>I    E11

oui

E13    oui ← Res=0 → non    E16

P accepté          P refusé

<u>**Fig. 3**</u>

```
┌──────────────────────────────────────┐
│  Attribuer et mémoriser S dans MNV    │──── E1
│      ┌──┐   ┌──┐   ┌──┐              │
│      │SI│---│Si│---│SI│              │
│      └──┘   └──┘   └──┘              │
└──────────────────────────────────────┘
                   │
                   ▼
┌──────────────────────────────────────┐
│              dans PR                  │
│             ST=FT(S)                  │──── E1a
│          ou ST=ST(S,NA)               │
│        Mémoriser ST dans MNV          │
│     ┌───┐   ┌───┐   ┌───┐            │
│     │ST1│---│STi│---│STI│            │
│     └───┘   └───┘   └───┘            │
└──────────────────────────────────────┘
                   │
                   ▼
┌──────────────────────────────────────┐
│     Introduire carte dans TE          │──── E3
│        Composer P dans TE             │
└──────────────────────────────────────┘
                   │
                   ▼
┌──────────────────────────────────────┐
│  TE──►┌──┐   ┌──┐   ┌──┐──►MA        │──── E4
│       │P1│---│Pi│---│PI│             │
│       └──┘   └──┘   └──┘             │
└──────────────────────────────────────┘
                   │
                   ▼
┌──────────────────────────────────────┐
│              dans PR                  │
│             PT=FT(P)                  │──── E4a
│          ou PT=FT(P,NA)               │
│        Mémoriser PT dans MA           │
│     ┌───┐   ┌───┐   ┌───┐            │
│     │PT1│---│PTi│---│PTI│            │
│     └───┘   └───┘   └───┘            │
└──────────────────────────────────────┘
                   │
                   ▼
┌──────────────────────────────────────┐
│  Générer dans PR et mémoriser A       │
│              dans MNV                  │──── E2a
│      ┌──┐   ┌──┐   ┌──┐              │
│      │AI│---│Ai│---│AI│              │
│      └──┘   └──┘   └──┘              │
└──────────────────────────────────────┘
                   │
                   ▼
┌──────────────────────────────────────┐
│     1≤i≤I  ;   Res=0                  │──── E5a
└──────────────────────────────────────┘
                   │
                   ▼
┌──────────────────────────────────────┐
│  V1=Si ou STi;V2=Pi ou PTi            │──── E6
└──────────────────────────────────────┘
                   │
                   ▼
┌──────────────────────────────────────┐
│  Res=Res OU(V1 XOR V2)                │──── E7
└──────────────────────────────────────┘
```

E9a          oui    ⟨ Res=0 ⟩    non          E14a

```
┌──────────────┐      E8      ┌──────────────┐
│ i=i(modI)+1  │              │ i=i(modI)+1  │
└──────────────┘              └──────────────┘
```

E10                                              E15

```
┌────────────────────────┐   ┌────────────────────────┐
│ V1=Si ou STi;V2=Pi ou PTi│ │ V1=Ai     ;V2=Pi ou PTi │
└────────────────────────┘   └────────────────────────┘
```

non          ⟨ i>I ⟩          E11

E13          oui    ⟨ Res=0 ⟩    non          E16

```
┌──────────────┐              ┌──────────────┐
│ P accepté    │              │ P refusé     │
└──────────────┘              └──────────────┘
```